# EUROPEAN PATENT APPLICATION

(11) **EP 2 755 425 A1**
(43) Date of publication of application: **16.07.2014**
(21) Application number: 13305022.9
(22) Date of filing: 11.01.2013
(51) Int. Cl.: H04W 36/22, H04W 36/02

(54) **Cell reselection**

(71) Applicant: Alcatel Lucent, 75007 Paris (FR)
(72) Inventor: Puddle, Nicola, Swindon, Wiltshire SN5 7DJ (GB); Wong, Shin Horng, Swindon, Wiltshire SN5 7DJ (GB)
(74) Representative: Sarup, David Alexander

(57) **Abstract**

A method of performing cell reselection for user equipment performing data transmission in a wireless telecommunication network (10), user equipment and a computer program product operable to perform that method. The method comprises: determining an indication of a data traffic activity cell reselection threshold; assessing that user equipment cell reselection criteria have been met; evaluating whether the user equipment data traffic activity meets the data traffic activity cell reselection threshold and, if so, performing cell reselection. Aspects described may allow a network to implement a flexible trigger and decision matrix in relation to user equipment performing data transmissions whilst in a CELL_FACH (202) or similar RRC state.

## Description

### FIELD OF THE INVENTION

The present invention relates to a method of performing cell reselection for user equipment performing data transmission in a wireless telecommunication network, user equipment and a computer program product operable to perform that method.

### BACKGROUND

Wireless telecommunications networks are known. In a cellular system, radio coverage is provided by area. Those areas of radio coverage are known as cells. Abase station is located in each cell to provide the radio coverage. User equipment in each cell receives information and data from the base station and transmits information and data to the base station.

Information and data transmitted by the base station to the user equipment occurs on channels of radio carriers known as downlink carriers. Information and data transmitted by user equipment to the base station occurs on uplink data channels of radio carriers known as uplink carriers.

There are various radio states in which user equipment may operate in a UMTS telecommunications network. On initial turning on of user equipment in a cell, it will typically be in "idle mode". Once it synchronises and attaches itself to a base station, it gains a radio resource control (RRC) connection and is referred to as being in connected mode. User equipment in idle mode does not have a Radio Resource Control (RRC) connection.

If user equipment is RRC connected, it can typically be in one of five different RRC states: Cell_DCH, Cell_FACH, Enhanced Cell_FACH, Cell_PCH or URA_PCH.

User equipment typically moves into Cell_DCH state when its data traffic is high, since in such a state the user equipment is allocated a dedicated channel on which to transmit and receive data from base station. In UMTS network architecture, user equipment can be in Cell_DCH state, where it is expected to have high volume of data traffic.

Allowing user equipment to temporarily send and receive data traffic in a non Cell_DCH state, for example, whilst user equipment is in Cell_FACH or enhanced Cell_FACH states can offer a power saving compared to constant Cell_DCH state use, since no dedicated signalling is required. As a result, user equipment may be able to function with a proportion of down time, rather than being in a dedicated signalling state and thus is able to use less power. Use of non Cell_DCH states for communication within a communication network can thus offer some power saving but is not without implementation difficulties.

It is desired to provide a wireless telecommunications network offering improved efficiency.

### SUMMARY

Accordingly, a first aspect provides a method of performing cell reselection for user equipment performing data transmission in a wireless telecommunication network, the method comprising: determining an indication of a data traffic activity cell reselection threshold; assessing that user equipment cell reselection criteria have been met; evaluating whether the user equipment data traffic activity meets the data traffic activity cell reselection threshold and, if so, performing cell reselection.

The first aspect recognises that when user equipment is in a non-dedicated RRC state it is typically operable to perform cell reselection as it moves through a network and experiences changing radio network conditions. Whilst user equipment is operating in a CELL_FACH state, user equipment mobility is supported by using cell reselection procedures. Cell reselection procedures are also used for user equipment operating in CELL PCH and URA PCH states.

According to cell reselection procedures, user equipment is operable to perform measurements of pilot signals transmitted by network access nodes (base stations) in a network including its serving and neighbour cells. Such measurements allow the user equipment to evaluate the "best" cell to attach to. That evaluation is related to the cell which is being received most strongly by the user equipment. If user equipment evaluates that a neighbour cell signal is better than that of its serving cell, the user equipment is operable to "reselect" to that neighbour cell. Cell Reselection is performed by the user equipment, that is to say, the user equipment is operable to decide, based on measurement, which cell to attach to. In contrast, when user equipment is in a dedicated RRC state, namely a CELL DCH state, the user equipment has high data activity and is constantly in communication with the network, and any change to a serving cell is determined the network and executed in the form of a handover.

The introduction of increased data transmissions made by user equipment in a non-dedicated RRC state makes cell reselection procedures difficult. Typically user equipment which is operable to support data transmissions, for example, common EDCH transmissions made in CELL_FACH, is not allowed to perform cell reselection during uplink data transmissions. However, the enhancement of common E-DCH and enhanced Cell_FACH features, is such that user equipment may stay in a CELL_FACH RRC state for long periods of time and with a relatively high data activity. Given that user equipment may significantly move whilst performing such data transmissions and typically a network is unaware that the user equipment measurements indicate that cell reselection criteria are met, the first aspect recognizes that it is possible to implement a trigger or set of appropriate criteria to allow the network to configure user equipment such that it is operable to perform cell reselection when operating in a CELL_FACH, or similar, RRC state, whilst performing uplink data transmission.

In one embodiment, the indication of a data traffic activity cell reselection threshold is configured by a control node in the wireless telecommunication network. Accordingly, different regions of a network may implement a different data traffic activity cell reselection threshold, as is appropriate to user equipment operating in that region of a network. In one embodiment, determining an indication of a data traffic activity cell reselection threshold comprises receiving a system information message comprising the data traffic activity cell reselection threshold. Other means of notification may, of course be implemented, for example, user specific messaging or paging messaging on a user by user basis.

In one embodiment, the data traffic activity cell reselection threshold comprises an indication of threshold user equipment data traffic buffer occupancy. In one embodiment, the indication of threshold user equipment data traffic buffer occupancy comprises a threshold transport channel traffic volume. Accordingly, the trigger criteria used to determine whether user equipment may be allowed to perform a cell reselection can be based on user equipment buffer occupancy. Such embodiments recognise that user equipment operating in a CELL_FACH RRC, or similar RRC state may be operable to provide the network with an indication of measured buffer occupancy. Some user equipment may already be operable to provide such an indication, for example, user equipment may be operable to report occurrence of an event 4a and/or 4b to the network. Event 4a occurs when the user equipment determines that a Transport Channel Traffic Volume exceeds an absolute threshold. Event 4b occurs when the user equipment determines that a Transport Channel Traffic Volume becomes smaller than an absolute threshold. Events 4a and 4b are typically used by the network to control whether user equipment should transition to another, more appropriate, RRC state.

However aspects and embodiments recognize that using an indication of buffer occupancy, for example, by using a traffic volume measurement (TVM), can be useful in order to determine whether user equipment operating in CELL_FACH or similar, might be a candidate for allowing reselection to a neighbour cell if cell reselection criteria are determined to be met.

Since user equipment uplink transmissions at cell edge can cause inter-cell interference, if user equipment has significant data left to transmit whilst in a non CELL_DCH state, then it can be advantageous to allow user equipment to be operable to perform reselection to a neighbour cell if cell reselection criteria are met rather than allow user equipment to move deeper into the neighbour cell, causing increased interference in that neighbor cell. If, however, user equipment does not have a lot of data left to transmit whilst in a non CELL_DCH state, then it maybe more appropriate for that user equipment to remain attached within the current cell and not disrupt data transmissions by operating to perform a cell reselection, even if cell reselection criteria are met. Aspects and embodiments recognize that data buffer occupancy may be used as a factor when selecting criteria upon the basis of which to implement cell reselection for user equipment making uplink data transmissions.

In one embodiment, the method further comprises: applying an updated cell reselection parameter if user equipment data traffic activity meets the data traffic activity cell reselection threshold and cell reselection is performed. In one embodiment, the updated cell reselection parameter comprises an updated cell reselection trigger to be applied after the cell reselection is performed. According to some embodiments, a cell reselection parameter, for example, cell reselection hysteresis, can be implemented such that it is a function of user equipment buffer occupancy during uplink transmission. Allowing cell reselection during uplink transmissions whilst user equipment is in a non-dedicated state results in user equipment needing to interrupt its uplink transmissions with an existing serving cell in order to perform reselection to a new cell. Any "ping-pong" between cells will lead to multiple interruptions to the transmission. Thus according to some embodiments if it is determined that a user equipment buffer meets occupancy criteria such that cell reselection is deemed necessary, a high cell reselection hysteresis can be implemented to ensure that reselection to a target cell is unlikely to lead to user equipment ping-pong back to the original cell. If user equipment is not performing uplink transmissions whilst in a non dedicated RRC state, then the user equipment can use legacy reselection hysteresis rather than reselection hysteresis linked to buffer occupancy.

A second aspect provides a computer program product operable, when executed on a computer, to perform the method of the first aspect.

A third aspect provides user equipment configured to perform cell reselection when performing data transmission in a wireless telecommunication network, the user equipment comprising: determination logic configured to determine an indication of a data traffic activity cell reselection threshold; assessment logic configured to assess that user equipment cell reselection criteria have been met; cell reselection logic configured to evaluate whether the user equipment data traffic activity meets the data traffic activity cell reselection threshold and, if so, perform cell reselection.

In one embodiment, the indication of a data traffic activity cell reselection threshold is configured by a control node in the wireless telecommunication network.

In one embodiment, the data traffic activity cell reselection threshold comprises an indication of threshold user equipment data traffic buffer occupancy.

In one embodiment, the indication of threshold user equipment data traffic buffer occupancy comprises a threshold transport channel traffic volume.

In one embodiment, said determination logic is operable to receive a system information message comprising the data traffic activity cell reselection threshold.

In one embodiment, the cell reselection logic is further configured to apply an updated cell reselection parameter if user equipment data traffic activity meets the data traffic activity cell reselection threshold and cell reselection is performed.

In one embodiment, the cell reselection logic is configured to apply an updated cell reselection parameter which comprises an updated cell reselection trigger to be applied after the cell reselection is performed.

A fourth aspect provides a method of configuring user equipment performing data transmission in a wireless telecommunication network to perform cell reselection, the method comprising: calculating an indication of a data traffic activity cell reselection threshold; and informing user equipment in a wireless telecommunication network of the data traffic activity cell reselection criteria.

Such a network control node, may, for example comprise an RNC or suitably configured base station. Signalling from an RNC may be directed to user equipment via transmissions made by a base station.

A fifth aspect provides a computer program product operable, when executed on a computer, to perform the method of the fourth aspect.

A sixth aspect provides a network control node operable to configure user equipment performing data transmission in a wireless telecommunication network to perform cell reselection, the network control node comprising: calculation logic operable to calculate an indication of a data traffic activity cell reselection threshold; and communication logic operable to inform user equipment in a wireless telecommunication network of the data traffic activity cell reselection criteria.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates the main components of a wireless telecommunications network according to one embodiment; and
Figure 2 illustrates a set of radio resource control states of user equipment suitable for use in the wireless telecommunications network of Figure 1.

### DESCRIPTION OF THE EMBODIMENTS

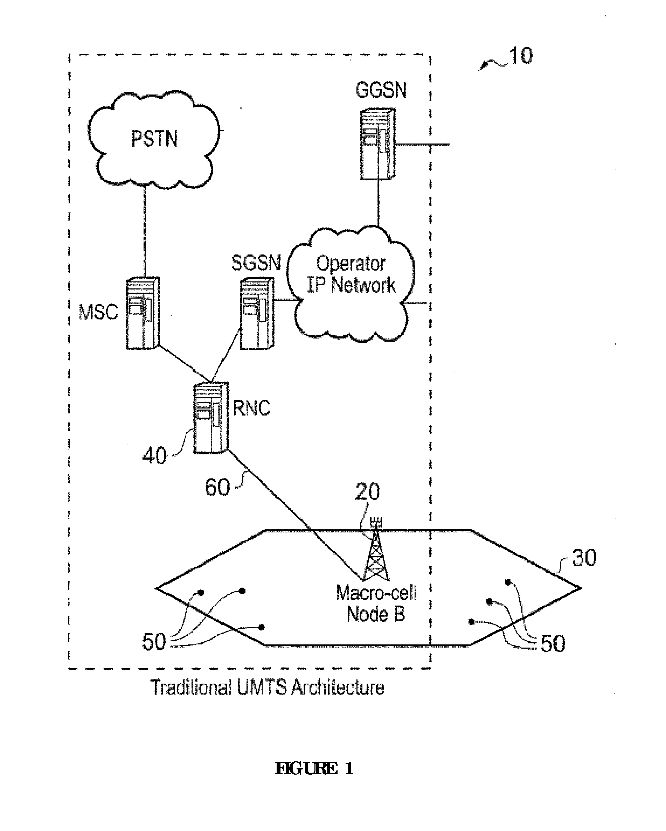

Figure 1 illustrates schematically the main components of a wireless telecommunications system 10 according to one embodiment. User equipment 50 roam through the wireless telecommunications system. Base stations 20 are provided which support areas ofradio coverage 30. A number of such base stations 20 are provides and distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Each base station 20 has multiple antennas. It will be appreciated that Figure 1 illustrates a small subset of a total number of user equipment and base stations that may be present in a typically communications system.

The wireless communications system is managed by a radio network controller (RNC) 40. The radio network controller 40 controls operation of the wireless telecommunications system by communicating with a plurality of base stations over a backhaul communications link 60. The RNC also communicates with user equipment 50 via each base station and thus effectively manages a region of the entire wireless communications system.

User equipment communicates with base station 20 by transmitting data and information on channels known as "uplink" or "reverse" channels, and base station 20 communicates with user equipment 50 by transmitting data and information on radio channels known as "downlink" or "forward" channels.

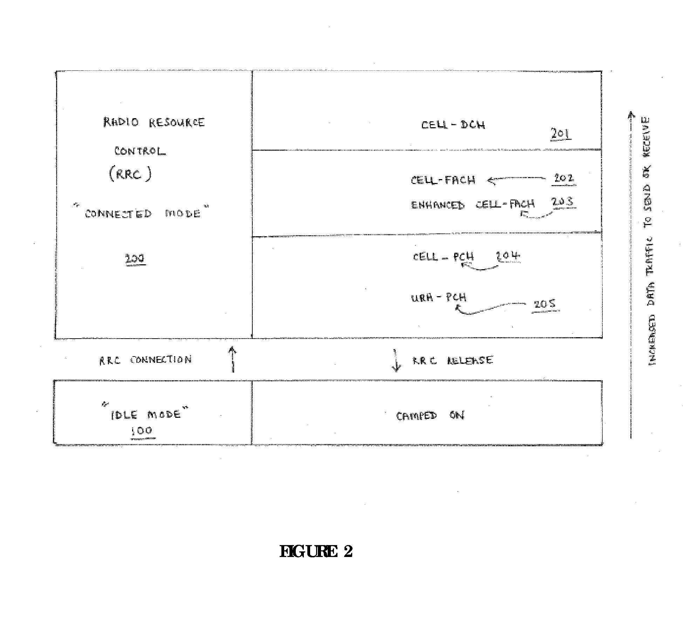

By way of background, Figure 2 illustrates schematically various radio states in which user equipment 50 may operate in a UMTS telecommunications network. On initial turning on of user equipment in a cell 30, it will typically be in "idle mode" 100. Once it synchronises and attaches itself to a base station 20, it gains a radio resource control (RRC) connection and is referred to as being in connected mode 200. User equipment in idle mode does not have a Radio Resource Control (RRC) connection.

If user equipment is RRC connected 200, it can be in one of five different RRC states: Cell_DCH (201), Cell_FACH (202), Enhanced Cell_FACH (203), Cell_PCH (204) and URA_PCH (205) states.

User equipment typically moves into Cell_DCH (201) state when its traffic is high, since in such a state the user equipment is allocated a dedicated channel on which to transmit and receive data from base station 20. In UMTS network architecture, user equipment can be in Cell_DCH state, where it is expected to have high volume of traffic.

Historically user equipment operated, when not in Cell_DCH state, using a Random Access Channel (RACH) on the uplink and a base station would operate to communicate with user equipment using a Forward Access Channel (FACH). RACH and FACH had a very small data carrying ability and in W-CDMA or UMTS systems a capability for user equipment and base stations to operate and communicate data traffic therebetween using a shared or common resource on downlink and uplink when user equipment is in CELL_FACH state has been introduced via Enhanced CELL_FACH and EUL in CELL_FACH. In the uplink the data traffic transmission occurs using an Enhanced Dedicated Channel (EDCH) and in the downlink traffic is sent on a High Speed Downlink Shared Channel (HS-DSCH). Those channels allow user equipment and base stations to communicate and transmit larger data packets between themselves for a time, without the need for user equipment to enter Cell_DCH state. Such an arrangement allows user equipment to remain in the Cell_FACH state longer without transiting to "more dedicated" states, thus allowing a power consumption saving.

The deployment of these enhanced features to the Cell_FACH state can allow "always on" type services, for example, Push to talk over cellular (PoC), Push email and VPN connections, which transmit frequent but small packets between the UE and server, to be supported in CELL_FACH state without the need to enter the CELL_DCH state.

Although enhanced functionality of a Cell_FACH state allows data packets to be sent between a base station and user equipment (and vice versa) whilst the user equipment is in CELL_FACH state, such an arrangement can be wasteful of resources since information which is typically constantly available to a base station in complete dedicated signalling modes, for example, Cell_DCH, is no longer constantly available. As a result, guesses and approximations may be made at a base station to try and ensure communication with user equipment can occur. Thus operation of base station signalling to user equipment is compromised. For example, a base station will typically have access to direct information from user equipment operating in a dedicated signalling mode regarding the radio condition (also known as radio channel propagation conditions) being experienced by that user equipment. Such information regarding radio condition may, for example, comprise Channel Quality Information (CQI) and/or feedback protocol information such as ACK/NACK information. That information can be used by a base station to determine a suitable data packet size to send to user equipment. If user equipment is experiencing good radio condition a large data packet may be sent with a high likelihood of successful receipt. If a poor radio condition is being experienced, a base station may send smaller data packets to that user equipment, to try and ensure the data traffic is successfully received.

In a UMTS (Universal Mobile Telecommunications System) network, as described above, user equipment (UE) can be in one of several states depending on its level of activity. One of those states is the CELL FACH state. In this state user equipment is connected to the network but typically has low data activity.

Whilst user equipment is operating in a CELL_FACH state, user equipment mobility is supported by using cell reselection procedures. Cell reselection procedures are also used for user equipment operating in CELL PCH and URA PCH states.

According to cell reselection procedures, user equipment is operable to perform measurements of pilot signals transmitted by network access nodes (base stations) in a network including its serving and neighbour cells. Such measurements allow the user equipment to evaluate the "best" cell to attach to. That evaluation is related to the cell which is being received most strongly by the user equipment. If user equipment evaluates that a neighbour cell signal is better than that of its serving cell, the user equipment is operable to "reselect" to that neighbour cell. Cell Reselection is performed by the user equipment, that is to say, the user equipment is operable to decide, based on measurement, which cell to attach to. In contrast, when user equipment is in a dedicated RRC state, namely a CELL DCH state, the user equipment has high data activity and is constantly in communication with the network, and any change to a serving cell is determined the network and executed in the form of a handover.

In accordance with Cell Reselection procedures, once user equipment has determined that a cell other than a current serving cell meets cell reselection criteria, it is operable to send a cell update message to an identified target cell. If the user equipment meets criteria to be allowed to attach to the target cell, a cell update confirm message is sent back to the user equipment. Since it is user equipment that decides when to initiate and perform a cell reselection procedure, the core network is typically unaware of user equipment cell reselection decisions until it receives a cell update message from the user equipment.

Typically user equipment which is operable to support data transmissions, for example, common EDCH transmissions made in CELL_FACH, is not allowed to perform cell reselection during uplink data transmissions. However, the enhancement of common E-DCH and enhanced Cell_FACH features, is such that user equipment may stay in a CELL_FACH RRC state for long periods of time and with a relatively high data activity. Given that user equipment may significantly move whilst performing such data transmissions and typically a network is unaware that the user equipment measurements indicate that cell reselection criteria are met, it is possible to implement a trigger or set of appropriate criteria to allow the network to configure user equipment such that it is operable to perform reselection when operating in a CELL_FACH, or similar, RRC state, whilst performing uplink data transmission.

It is possible for a network to implement a simple on/off instruction in relation to allowing user equipment to perform reselection when operating in a CELL_FACH, or similar, RRC state, whilst performing uplink data transmission, however such an option may not give a network enough flexibility in deciding whether it is appropriate or sensible for given user equipment to perform a call reselection.

### Overview

Before discussing the embodiments in any more detail, first an overview will be provided. Aspects and embodiments described herein may allow a network to implement a flexible trigger and decision matrix in relation to user equipment performing data transmissions whilst in a CELL_FACH or similar RRC state. The trigger criteria used to determine whether user equipment may be allowed to perform a cell reselection can be based on user equipment buffer occupancy.

User equipment operating in a CELL_FACH RRC state may be operable to provide the network with an indication of measured buffer occupancy. Some user equipment may already be operable to provide such an indication, for example, user equipment maybe operable to report occurrence of an event 4a and/ or 4b to the network. Event 4a occurs when the user equipment determines that a Transport Channel Traffic Volume exceeds an absolute threshold. Event 4b occurs when the user equipment determines that a Transport Channel Traffic Volume becomes smaller than an absolute threshold. Events 4a and 4b are typically used by the network to control whether user equipment should transition to another, more appropriate, RRC state.

However aspects and embodiments recognize that using an indication of buffer occupancy, for example, by using a traffic volume measurement (TVM), can be useful in order to determine whether user equipment operating in CELL_FACH or similar, might be a candidate for allowing reselection to a neighbour cell if cell reselection criteria are determined to be met.

Since user equipment uplink transmissions at cell edge can cause inter-cell interference, if user equipment has significant data left to transmit whilst in a non CELL_DCH state, then it can be advantageous to allow user equipment to be operable to perform reselection to a neighbour cell if cell reselection criteria are met rather than allow user equipment to move deeper into the neighbour cell, causing increased interference in that neighbor cell. If, however, user equipment does not have a lot of data left to transmit whilst in a non CELL_DCH state, then it maybe more appropriate for that user equipment to remain attached within the current cell and not disrupt data transmissions by operating to perform a cell reselection, even if cell reselection criteria are met. Aspects and embodiments recognize that data buffer occupancy may be used as a factor when selecting criteria upon the basis of which to implement cell reselection for user equipment making uplink data transmissions.

According to some embodiments, the network broadcasts an indication of reselection Traffic Volume Measurement criteria to user equipment by means of a System Information Block.

According to some embodiments, a cell reselection parameter, for example, cell reselection hysteresis, can be implemented such that it is a function of user equipment buffer occupancy during uplink transmission. Allowing cell reselection during uplink transmissions whilst user equipment is in a non-dedicated state results in user equipment needing to interrupt its uplink transmissions with an existing serving cell in order to perform reselection to a new cell. Any "ping-pong" between cells will lead to multiple interruptions to the transmission. Thus according to some embodiments if it is determined that a user equipment buffer meets occupancy criteria such that cell reselection is deemed necessary, a high cell reselection hysteresis can be implemented to ensure that reselection to a target cell is unlikely to lead to user equipment ping-pong back to the original cell. If user equipment is not performing uplink transmissions whilst in a non dedicated RRC state, then the user equipment can use legacy reselection hysteresis rather than reselection hysteresis linked to buffer occupancy.

### Example 1

1. A user equipment is performing uplink data transmission on common-EDCH whilst in cell_FACH state;
2. The user equipment detects that cell reselection criteria have been met;
3. The user equipment is operable to checks its buffer occupancy. The user equipment checks buffer occupancy against a cell reselection TVM criteria broadcast in a System Information Block
4. If (3) is TRUE then the user equipment is operable to perform reselection to a target neighbour cell.
5. If (3) is FALSE, then the user equipment is operable to continue with uplink data transmissions whilst connected to a current cell.

Aspects and embodiments may allow user equipment to be operable to reselect in situations when uplink data transmissions would be compromised if reselection did not occur.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of performing cell reselection for user equipment performing data transmission in a wireless telecommunication network, said method comprising:
determining an indication of a data traffic activity cell reselection threshold;
assessing that user equipment cell reselection criteria have been met;
evaluating whether said user equipment data traffic activity meets said data traffic activity cell reselection threshold and, if so,
performing cell reselection.

2. A method according to claim 1, wherein said indication of a data traffic activity cell reselection threshold is configured by a control node in said wireless telecommunication network.

3. A method according to claim 1 or claim 2, wherein said data traffic activity cell reselection threshold comprises an indication of threshold user equipment data traffic buffer occupancy.

4. A method according to claim 3, wherein said indication of threshold user equipment data traffic buffer occupancy comprises a threshold transport channel traffic volume.

5. A method according to any preceding claim, wherein determining an indication of a data traffic activity cell reselection threshold comprises receiving a system information message comprising said data traffic activity cell reselection threshold.

6. A method according to any preceding claim, further comprising: applying an updated cell reselection parameter if user equipment data traffic activity meets said data traffic activity cell reselection threshold and
cell reselection is performed.

7. A method according to claim 6, wherein said updated cell reselection parameter comprises an updated cell reselection trigger to be applied after said cell reselection is performed.

8. A computer program product operable, when executed on a computer, to perform the method of any one of claims 1 to 7.

9. User equipment configured to perform cell reselection when performing data transmission in a wireless telecommunication network, said user equipment comprising:
determination logic configured to determine an indication of a data traffic activity cell reselection threshold;
assessment logic configured to assess that user equipment cell reselection criteria have been met;
cell reselection logic configured to evaluate whether said user equipment data traffic activity meets said data traffic activity cell reselection threshold and, if so, perform cell reselection.

10. A method of configuring user equipment performing data transmission in a wireless telecommunication network to perform cell reselection, said method comprising:
calculating an indication of a data traffic activity cell reselection threshold; and
informing user equipment in a wireless telecommunication network of said data traffic activity cell reselection criteria.

11. A computer program product operable, when executed on a computer, to perform the method of claim 10.

12. A network control node operable to configure user equipment performing data transmission in a wireless telecommunication network to perform cell reselection, said network control node comprising:
calculation logic operable to calculate an indication of a data traffic activity cell reselection threshold; and
communication logic operable to inform user equipment in a wireless telecommunication network of said data traffic activity cell reselection criteria.
